(19) Europäisches Patentamt
European Patent Office
Office européen des brevets

(11) **EP 3 455 830 B1**

(12) **EUROPÄISCHE PATENTSCHRIFT**

(45) Veröffentlichungstag und Bekanntmachung des Hinweises auf die Patenterteilung:
**15.12.2021  Patentblatt 2021/50**

(21) Anmeldenummer: **17725857.1**

(22) Anmeldetag: **11.05.2017**

(51) Int Cl.:
*G07D 7/00* *(2016.01)*          *G01N 21/86* *(2006.01)*
*G07D 7/12* *(2016.01)*

(86) Internationale Anmeldenummer:
**PCT/EP2017/000573**

(87) Internationale Veröffentlichungsnummer:
**WO 2017/194190 (16.11.2017 Gazette 2017/46)**

(54) **VORRICHTUNG UND VERFAHREN ZUR ECHTHEITSPRÜFUNG EINES SICHERHEITSELEMENTS**

APPARATUS AND METHOD FOR CHECKING THE AUTHENTICITY OF A SECURITY ELEMENT

DISPOSITIF ET PROCÉDÉ DE VÉRIFICATION D'UN ÉLÉMENT DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2016  DE 102016005923**

(43) Veröffentlichungstag der Anmeldung:
**20.03.2019  Patentblatt 2019/12**

(73) Patentinhaber: **Giesecke+Devrient Currency Technology GmbH**
**81677 München (DE)**

(72) Erfinder:
• **SU, Shanchuan**
  **85579 Neubiberg (DE)**
• **HOLL, Norbert**
  **82110 Germering (DE)**

(74) Vertreter: **Giesecke + Devrient IP**
**Prinzregentenstraße 159**
**81677 München (DE)**

(56) Entgegenhaltungen:
**WO-A1-2014/075796        DE-A1- 10 243 051**
**DE-A1-102011 116 487**

**Beschreibung**

Die Erfindung betrifft eine Vorrichtung und ein Verfahren zur Echtheitsprüfung eines Sicherheitselements, z.B. des Sicherheitselements eines Wertdokuments, sowie eine Wertdokumentbearbeitungsvorrichtung, die die Vorrichtung zur Echtheitsprüfung des Sicherheitselements aufweist.

In Banknotenbearbeitungssystemen werden Eigenschaften von Banknoten, wie z.B. Druckbild, Stückelung, Echtheit und Verschmutzung, ermittelt, indem physikalische Eigenschaften der Banknoten mittels Sensoren erfasst und die hierbei erzeugten Sensordaten mittels Algorithmen ausgewertet werden.

Beispielsweise ist es zur Echtheitsprüfung von Sicherheitselementen bekannt, das Transmissionsbild eines auf einer Banknote befindlichen Sicherheitsfadens zu erfassen und den Sicherheitsfaden auf darin enthaltene Zeichen, sogenannten Cleartext, zu prüfen. Dabei macht man sich zunutze, dass der Sicherheitsfaden im Transmissionsbild üblicherweise dunkel bzw. schwarz erscheint, während an den Stellen, an denen sich die Aussparungen der eingebrachten Zeichen befinden, Beleuchtungslicht hindurchtritt und die Zeichen folglich in Transmission hell erscheinen.

Desweiteren sind auch Sicherheitselemente, z.B. Sicherheitsfäden, bekannt, bei denen sich dem Betrachter beim Bewegen des Sicherheitselements, z.B. beim Kippen der Banknote, ein optisch variabler Effekt, z.B. ein optischer Bewegungseffekt oder ein Vergrößerungseffekt zeigt. Der optisch variable Effekt dieser Sicherheitsfäden wird beispielsweise durch ein Mikrolinsenraster und einem dahinter befindlichen Motiv, z.B. einem rasterförmigen Muster oder rasterförmig angeordneten Zeichen erzeugt. Sie werden z.B. als Sicherheitsfäden mit "Moiré-Effekt" oder mit "Modulo-Vergrößerung" oder als "Motion Fäden" bezeichnet. Der optische variable Effekt ist für eine Echtheitsprüfung des Sicherheitselements durch den menschlichen Betrachter vorgesehen.

Zur maschinellen Prüfung derartiger Sicherheitsfäden ist es aus der US8965099 B2 bekannt, mit Hilfe eines optischen Sensors zu überprüfen, ob sich der erwartete optisch variable Effekt tatsächlich auch detektieren lässt. Dazu wird eine Banknoten mit einem Motion-Sicherheitsfaden unter mindestens zwei bestimmten Einstrahlwinkeln beleuchtet und unter einem geeigneten Winkel ein Remissionsbild aufgenommen, wobei entsprechend zwei verschiedene Motive detektiert werden. Die beiden Remissionsbilder werden voneinander subtrahiert und die Differenzwerte aufsummiert. Falls - wie bei einer Fälschung - unter beiden Winkeln dieselben Bilder detektiert werden, sind die Differenzwerte null und die Summe entsprechend auch null. Nur bei dem echten Motion-Sicherheitsfaden unterscheiden sich die beiden Remissionsbilder, so dass die berechnete Summe der Differenzwerte eine Schwelle übersteigt. Auf diese Weise wird überprüft, ob sich unter den verschiedenen Winkeln in der Remission auch verschiedene Motive ergeben. Nachteilig ist, dass bei diesem Verfahren für verschiedene Sicherheitsfäden, die unterschiedliche Mikrolinsenraster aufweisen, die notwendigen Beleuchtungs-/Detektionswinkel, unter denen die Motive detektiert werden müssen, variieren. Für verschiedene Sicherheitsfäden sind daher verschiedene Sensoren notwendig. Desweiteren ist zur Erkennung der Motive eine hohe optische Auflösung des Sensors erforderlich.

Weitere Verfahren zur Prüfung eines Sicherheitselements sind aus DE 102 43 051 A1, DE 10 2011 116487 A1, und WO 2014/075796 A1 bekannt.

Es ist daher Aufgabe der vorliegenden Erfindung, ein Verfahren, eine Vorrichtung anzugeben, mit welcher solche Sicherheitselemente, die einen optisch variablen Effekt zeigen, auf einfache und dennoch zuverlässige Weise auf ihre Echtheit überprüft werden können.

Diese Aufgabe wird durch die Vorrichtung und das Verfahren gemäß den beiliegenden Ansprüchen gelöst.

Im Transmissionsbild eines Wertdokuments erscheinen Sicherheitsfäden üblicherweise durchgehend dunkel bzw. schwarz, wobei eine Lichttransmission allenfalls durch die als Aussparungen im Sicherheitsfaden ausgebildeten Cleartext-Zeichen Licht stattfindet. Anhand des Transmissionsbilds wird daher üblicherweise lediglich die Position des Sicherheitsfadens innerhalb des Wertdokuments ermittelt. Da aufgedruckte Motive des Sicherheitsfadens in Transmission nicht sichtbar sind, wird das Transmissionsbild üblicherweise nicht zur Echtheitsprüfung von Sicherheitsfäden verwendet.

Im Vorfeld der Erfindung wurde nun überraschend festgestellt, dass Fenster-Sicherheitsfäden mit optisch variablem Effekt, die mit Mikrolinsen oder ähnlichen optischen Elementen ausgestattet sind, im Transmissionsbild nicht durchgehend dunkel erscheinen, sondern eine Hell-Dunkel-Modulation aufweisen. Bei der Hell-Dunkel-Modulation erscheinen diejenigen Abschnitte des Sicherheitsfadens, die nicht ins Papier eingebettet sind sondern in den Fenstern liegen, im Transmissionsbild auffallend hell. Im Gegensatz dazu erscheinen die dazwischen liegenden Abschnitte, in denen der Sicherheitsfaden ins Papier eingebettet ist, dunkel. Besonders deutlich sind diese hellen Abschnitte im Infrarot-Transmissionsbild des Wertdokuments, da es im Sichtbaren zu einer teilweisen Absorption des Lichts durch das Druckbild des Wertdokuments kommt, sofern sich ein solches mit dem Sicherheitselement überlagert. Diese hellen Abschnitte in den Fenstern werden auf einen optischen Effekt von optischen Elementen (z.B. der Mikrolinsen) des Sicherheitsfadens zurückgeführt, die das einfallende Licht in Abhängigkeit des Einfallswinkels ablenken und eine erhöhte Intensität auf den gegenüber liegenden Detektor richten. Auch das Remissionsbild eines solchen Sicherheitselements weist eine Hell-Dunkel-Modulation auf, jedoch genau umgekehrt zu dem Transmissionsbild erscheinen dort die in das Papier eingebetteten Abschnitte des Sicherheitselements hell und die Abschnitte in den Fenstern, in denen das Sicherheitselement offen sichtbar ist, dunkel. Gefälschte Sicherheitselemente hingegen, die zur Nachstellung des Fenster-Sicherheitsfaden aus einem Aufdruck mit Hell-Dunkel-Modulation bestehen, weisen dagegen in Remission und Transmission keine zueinander umgekehrte Hell-Dunkel-Modulation auf.

Bei dem erfindungsgemäßen Verfahren wird diese umgekehrte Hell-Dunkel-Modulation in Remission und Transmission zur Echtheitsprüfung des Sicherheitselements überprüft. Zur Echtheitsprüfung des Sicherheitselements wird die von dem Sicherheitselement remittierte und die durch das Sicherheitselement transmittierte elektromagnetische Strahlung mit Hilfe mindestens eines Sensors erfasst und ein der remittierten Intensität entsprechender Remissionsverlauf und ein der transmittierten Intensität entsprechender Transmissionsverlauf entlang der Längsrichtung des Sicherheitselements erzeugt. Zur Echtheitsprüfung des Sicherheitselements werden folgende Schritte durchgeführt:

a) der Remissionsverlauf und der Transmissionsverlauf werden entlang der Längsrichtung des Sicherheitselements zur Bestimmung eines Kombinationsverlaufs pixelweise miteinander verrechnet, insbesondere pixelweise miteinander addiert und/oder pixelweise voneinander zu subtrahiert, und

b) der durch das pixelweise Verrechnen erhaltenen Kombinationsverlauf wird im Hinblick auf eine Intensitätsmodulation entlang der Längsrichtung des Sicherheitselements geprüft, insbesondere im Hinblick auf das Vorhandensein einer Intensitätsmodulation und/oder im Hinblick auf eine Höhe der Intensitätsmodulation, und

c) es wird eine Echtheitsprüfung des Sicherheitselements durchgeführt, bei der die Echtheit des Sicherheitselements in Abhängigkeit der Intensitätsmodulation des Kombinationsverlaufs bewertet wird.

Insbesondere wird dabei das Vorhandensein oder Verschwinden der Intensitätsmodulation und/oder die Höhe der Intensitätsmodulation des Kombinationsverlaufs als Kriterium für die Echtheit des Sicherheitselements verwendet. Je nach Erfindungsvariante kann zur Echtheitsprüfung des Sicherheitselements entweder die Intensitätsmodulation des Kombinationsverlaufs oder das Abschwächen bzw. Auslöschen der Intensitätsmodulation des Kombinationsverlaufs herangezogen werden. Das Sicherheitselement wird im Hinblick auf die Intensitätsmodulation des Kombinationsverlaufs geprüft, wobei jedoch keine zweidimensionale Bildauswertung des Sicherheitselements im Hinblick auf die Prüfung des optisch variablen Effekts des Sicherheitselement zu erfolgen braucht.

Insbesondere ist das Sicherheitselement ein Fenster-Sicherheitselement, das zumindest teilweise lichtdurchlässig ist. Beispielsweise weist das Sicherheitselement ein Mikrolinsenraster auf. Falls das Sicherheitselement ein Fenster-Sicherheitsfaden mit Mikrolinsenraster ist, werden der Remissionsverlauf und der Transmissionsverlauf im Bereich des Mikrolinsenrasters des Sicherheitselements detektiert und ausgewertet. Der im Bereich des Mikrolinsenrasters erhaltene Kombinationsverlauf wird im Hinblick auf eine Intensitätsmodulation ausgewertet und zur Echtheitsprüfung des Sicherheitselements verwendet.

Die Erfindung ist jedoch keineswegs auf die Echtheitsprüfung von Fenster-Sicherheitsfäden mit Mikrolinsenraster beschränkt, sondern für beliebige Sicherheitselemente geeignet, die die oben beschriebene umgekehrte Hell-Dunkel-Modulation in Remission und Transmission aufweisen. Beispielsweise kann das Sicherheitselement auch nicht-fadenförmig, z.B. mit einem geringeren Länge-Breite-Verhältnis geformt sein. Auch braucht das Sicherheitselement nicht (periodisch) in das Innere des Wertdokumentsubstrats eingebettet zu sein, sondern es könnte auch abwechselnd an den beiden gegenüberliegenden Wertdokumentoberseiten sichtbar sein. Das Sicherheitselement kann ein Fenster-Sicherheitselement eines Wertdokument sein. Das Wertdokument ist z.B. eine Banknote, eine Karte, ein Ausweis oder ein Sicherheitsdokument.

Der Remissions- und Transmissionsverlauf weisen entlang der einen Dimension jeweils einen Wertebereich aus einer Vielzahl unterschiedlicher Intensitätswerte auf. Der Wertebereich kann kontinuierlich oder diskret aus einer Vielzahl möglicher (analogen oder digitalen) Intensitätswerte bestehen. Für jede Position entlang der Längsrichtung wird ein Intensitätswert erzeugt, der der an dieser Position erfassten elektromagnetischen Strahlung entspricht.

Die Erfindung hat den Vorteil, dass der Remissions- und Transmissionsverlauf entlang von nur einer Dimension des Sicherheitselements ausgewertet werden. Anstatt den Bildausschnitt des Sicherheitselements einer aufwändigen Bildauswertung zu unterziehen, wird erfindungsgemäß also lediglich der erfasste Intensitätsverlauf der von dem Sicherheitselement entlang der Längsrichtung des Sicherheitselements ausgehenden elektromagnetischen Strahlung überprüft. Die Erfindung erlaubt damit eine optische Überprüfung von mit Mikrolinsen versehenen Sicherheitselementen, beispielsweise eines mit einer Mikrolinsen versehenen Fenster-Sicherheitsfadens, ohne dass das optische Auflösungsvermögen des jeweils verwendeten Sensors, ggf. einschließlich Optik, so groß zu sein hat, dass dieser die hinter den Mikrolinsen befindlichen Zeichen/Muster auflösen kann. Vielmehr kann das Auflösungsvermögen des erfindungsgemäß verwendeten Sensors kleiner sein als das für eine Erkennung solcher Zeichen erforderliche Auflösungsvermögen. Die Erfindung erlaubt somit eine Prüfung des auf dem Wertdokument befindlichen Sicherheitselements auf zuverlässige Weise, aber mit geringerem Aufwand.

Bevorzugt wird sowohl für den Transmissionsverlauf als auch für den Remissionsverlauf die von dem Sicherheitselement erfasste elektromagnetische Strahlung im infraroten Spektralbereich verwendet. Hierdurch kann die Modulation des Intensitätsverlaufs entlang der einen Längsrichtung des Sicherheitselements mit besonders hoher Zuverlässigkeit erfasst werden. Alternativ oder zusätzlich kann aber auch vorgesehen sein, vom Sicherheitselement ausgehende ultraviolette und/oder sichtbare Strahlung zu detektieren und erfindungsgemäß auszuwerten.

Bei einer ersten Variante der Erfindung werden zur Bestimmung des Kombinationsverlaufs der Remissionsverlauf und der Transmissionsverlauf entlang der Längsrichtung des Sicherheitselements pixelweise miteinander addiert ("Kompensation"). In diesem Fall wird bei der Echtheitsprüfung des Sicherheitselements das Sicherheitselement als echt bewertet, falls der Kombinationsverlauf entlang der Längsrichtung des Sicherheitselements keine oder eine verschwindend geringe Intensitätsmodulation aufweist (z.B. eine bestimmte Schwelle unterschreitet), und das Sicherheitselement als falsch bewertet, falls der Kombinationsverlauf entlang der Längsrichtung des Sicherheitselements eine (deutliche) Intensitätsmodulation aufweist (z.B. die die bestimmte Schwelle überschreitet).

Bei einer zweiten Variante der Erfindung wird zur Bestimmung des Kombinationsverlaufs der Remissionsverlauf und der Transmissionsverlauf entlang der Längsrichtung des Sicherheitselements pixelweise voneinander subtrahiert werden ("Invertierung"). In diesem Fall wird bei der Echtheitsprüfung des Sicherheitselements das Sicherheitselement als falsch bewertet, falls der Kombinationsverlauf entlang der Längsrichtung des Sicherheitselements keine oder eine verschwindend geringe Intensitätsmodulation aufweist (z.B. eine bestimmte Schwelle unterschreitet), und das Sicherheitselement als echt bewertet, falls der Kombinationsverlauf entlang der Längsrichtung des Sicherheitselements eine (deutliche) Intensitätsmodulation aufweist (z.B. die die bestimmte Schwelle überschreitet).

Für den Remissionsverlauf des Sicherheitselements eines Wertdokuments kann ein Ausschnitt eines vollflächigen Remissionsbilds des Wertdokuments verwendet werden. Alternativ kann stattdessen auch nur das Remissionsbild eines Teilbereichs des Wertdokuments aufgenommen werden, in dem das zu prüfende Sicherheitselement angeordnet ist. Analog kann auch der Transmissionsverlauf ein Ausschnitt aus einem vollflächigen Transmissionsbild sein oder nur das Transmissionsbild eines Teilbereichs des Wertdokuments aufgenommen werden, in dem das zu prüfende Sicherheitselement angeordnet ist. Der Transmissionsverlauf ist vorzugsweise ein im Rahmen einer Dunkelfeld-Transmissionsmessung detektierter Transmissionsverlauf.

Für den Remissionsverlauf bzw. Transmissionsverlauf wird z.B. der in der Mitte des Sicherheitsfadens entlang der Längsrichtung des Sicherheitsfadens detektierte Verlauf der Remission bzw. Transmission verwendet. Dazu kann ein Bildausschnitt verwendet werden, der in der Richtung senkrecht zur Längsrichtung eine Breite von einem oder mehreren Pixel hat. Zum Beispiel wird das Remissionsbild bzw. Transmissionsbild eines wenige Pixel breiten Streifens in der Mitte des Sicherheitsfadens zu einem einzigen Remissionsverlauf bzw. Transmissionsverlauf zusammengefasst, z.B. durch Mittelung der Intensität einiger (senkrecht zur Längsrichtung des Sicherheitselements) nebeneinander liegender Pixel.

Bevorzugt wird vor Beginn der Echtheitsprüfung die Identität des Wertdokuments bestimmt und bei der Echtheitsprüfung des Sicherheitselements die Schritte a), b) und c) in Abhängigkeit der Identität des Wertdokuments durchgeführt. Falls die Identitätsprüfung ergibt, dass das betreffende Wertdokument Fenster-Sicherheitselement mit optisch variablem Effekt, z.B. ein mit einem Mikrolinsenraster ausgestattetes Fenster-Sicherheitselement, aufweisen sollte, werden bei der Echtheitsprüfung des Sicherheitselements die genannten Schritte a), b) und c) durchgeführt. Und falls die Identitätsprüfung ergibt, dass das betreffende Wertdokument kein derartiges (z.B. mit einem Mikrolinsenraster ausgestattetes) Sicherheitselement aufweisen sollte, werden die Schritte a), b) und c) nicht durchgeführt.

Insbesondere kann der Remissionsverlauf und/oder der Transmissionsverlauf vor Durchführung der Schritte a), b) und c) dahingehend geprüft werden, ob deren Intensitätsmodulation eine bestimmte Mindest-Modulationsamplitude überschreitet. Falls der Remissionsverlauf und/oder der Transmissionsverlauf die Mindest-Modulationsamplitude überschreitet, werden zur Echtheitsprüfung des Sicherheitselements die genannten Schritte a), b) und c) durchgeführt, andernfalls wird das Sicherheitselement als falsch bewertet. Durch diese Vorprüfung kann sichergestellt werden, dass der Remissions- und/oder Transmissionsverlauf tatsächlich die erwartete Hell-Dunkel-Modulation aufweisen.

In einem ersten Ausführungsbeispiel wird der Kombinationsverlauf dadurch auf eine Intensitätsmodulation geprüft, dass die Standardabweichung des Kombinationsverlaufs entlang der Längsrichtung des Sicherheitselements bestimmt wird und diese Standardabweichung mit einer Schwelle verglichen wird. In Abhängigkeit davon, ob die Standardabweichung die Schwelle überschreitet oder nicht überschreitet, wird das Sicherheitselement als echt oder falsch bewertet. In dem Fall, wenn der Kombinationsverlauf durch pixelweise miteinander addieren des Remissionsverlaufs und des Transmissionsverlaufs entlang der Längsrichtung des Sicherheitselements bestimmt wird ("Kompensation"), wird die Standardabweichung mit einer Schwelle verglichen, und bei deren Überschreiten das Sicherheitselement als falsch bewertet und bei deren nicht-Überschreiten das Sicherheitselement als echt bewertet. In dem Fall, wenn der Kombinationsverlauf durch pixelweise voneinander subtrahieren des Remissionsverlaufs und des Transmissionsverlaufs entlang der Längsrichtung des Sicherheitselements bestimmt wird ("Invertierung"), wird die Standardabweichung mit einer Schwelle verglichen, und bei deren Überschreiten das Sicherheitselement als echt und bei deren nicht-Überschreiten das Sicherheitselement als falsch bewertet.

In einem zweiten Ausführungsbeispiel wird aus dem Remissions- und Transmissionsverlauf jeweils ein binärer Remissions- und Transmissionsverlauf entlang der Längsrichtung des Sicherheitselements ermittelt, bei dem der Remissions- und Transmissionsverlauf entlang der Längsrichtung des Sicherheitselements jeweils nur zwei unterschiedliche Intensitätswerte aufweisen. Die Prüfung des Sicherheitselements anhand des binären Remissions- und Transmissionsverlaufs kann wesentlich zuverlässiger durchgeführt werden als ein Vergleich des ursprünglichen (nicht-binären) Remissions-und Transmissionsverlaufs, da der ursprüngliche Remissions- und Transmissionsverlauf vom Zustand des Wertdokuments abhängen, während der binäre Remissions- und Transmissionsverlauf unabhängig vom Zustand des Wertdokuments sind.

Bei diesem Ausführungsbeispiel sind der zur Bestimmung des Kombinationsverlaufs verwendete Remissionsverlauf und Transmissionsverlauf, deren Intensitätswerte pixelweise miteinander verrechnet werden, ein binärer Remissionsverlauf und ein binärer Transmissionsverlauf. Aus dem Remissionsverlauf und aus dem Transmissionsverlauf wird jeweils durch Binärisieren ein binärer Remissionsverlauf und ein binärer Transmissionsverlauf berechnet, welche entlang der Längsrichtung des Sicherheitselements jeweils nur zwei unterschiedliche Intensitätswerte aufweisen. zur Bestimmung des Kombinationsverlaufs wird der binäre Remissionsverlauf anschließend entlang der Längsrichtung des Sicherheitselements pixelweise mit dem binären Transmissionsverlauf verrechnet. Beispielsweise wird zum Binärisieren des Remissionsverlaufs und des Transmissionsverlaufs jeweils ein Remissions-Mittelwert des Remissionsverlaufs und ein Transmissions-Mittelwert des Transmissionsverlaufs entlang der Längsrichtung des Sicherheitselements bestimmt und der binäre Remissionsverlauf durch pixelweise Vergleichen des Remissionsverlaufs mit dem Remissions-Mittelwert und der binäre Transmissionsverlauf durch pixelweise Vergleichen des Transmissionsverlaufs mit dem Transmissions-Mittelwert erhalten. So wird jedem Pixel des Remissionsverlaufs bzw. des Transmissionsverlaufs, dessen Intensitätswert den jeweiligen Mittelwert erreicht oder überschreitet, ein erster binärer Intensitätswert zugewiesen und jedem Pixel, dessen Intensitätswert den jeweiligen Mittelwert nicht überschreitet, ein zweiter binärer Intensitätswert zugewiesen.

Der aus dem binären Remissionsverlauf und dem binären Transmissionsverlauf berechnete Kombinationsverlauf kann dadurch auf seine Intensitätsmodulation geprüft werden, dass pixelweise die Summe der Intensitätswerte des Kombinationsverlaufs entlang der Längsrichtung des Sicherheitselements berechnet und mit einer Schwelle verglichen wird und das Sicherheitselement in Abhängigkeit davon, ob die berechnete Summe eine Schwelle überschreitet oder nicht überschreitet, als falsch oder echt bewertet wird.

Optional kann dabei die Summe der Intensitätswerte des Kombinationsverlaufs entlang der Längsrichtung des Sicherheitselements auf die Länge des Sicherheitselements normiert werden und die auf die Länge des Sicherheitselements normierte Summe mit einer Schwelle verglichen werden, wobei das Sicherheitselement in Abhängigkeit davon, ob die normierte Summe eine Schwelle überschreitet oder nicht überschreitet, als falsch oder echt bewertet wird. In dem Fall, wenn der Kombinationsverlauf durch Addieren des binären Remissionsverlaufs und des binären Transmissionsverlaufs berechnet wird, wird das Sicherheitselement als falsch bewertet, falls die normierte Summe eine bestimmte Schwelle überschreitet, und das Sicherheitselement als echt bewertet, falls die normierte Summe die bestimmte Schwelle nicht überschreitet. Und in dem Fall, wenn der Kombinationsverlauf durch voneinander Subtrahierendes binären Remissionsverlaufs und des binären Transmissionsverlaufs berechnet wird, wird das Sicherheitselement als falsch bewertet, falls die normierte Summe eine bestimmte Schwelle nicht überschreitet, und dass das Sicherheitselement als echt bewertet, falls die normierte Summe die bestimmte Schwelle überschreitet. Das Normieren hat den Vorteil, dass dieselbe Schwelle universell für Sicherheitselemente verschiedener Länge verwendet werden kann.

Bevorzugt werden der Remissionsverlauf und der Transmissionsverlauf entlang der Längsrichtung des Sicherheitselements zur Bestimmung eines ersten Kombinationsverlaufs $I(x)=(R(x)-T(x)$ pixelweise voneinander subtrahiert und zusätzlich, zur Bestimmung eines zweiten Kombinationsverlaufs $K(x)=R(x)+T(x)$ pixelweise miteinander addiert. Sowohl der erste als auch der zweite Kombinationsverlauf werden im Hinblick auf ihre Intensitätsmodulation geprüft und die Echtheit des Sicherheitselements in Abhängigkeit der Intensitätsmodulation des ersten Kombinationsverlaufs und in Abhängigkeit der Intensitätsmodulation des zweiten Kombinationsverlaufs bewertet. Anhand dieser beiden Kombinationsverläufe wird die Echtheitsprüfung des Sicherheitselements noch zuverlässiger.

In dem ersten Ausführungsbeispiel wird für den ersten Kombinationsverlauf eine erste Standardabweichung bestimmt, und für den zweiten Kombinationsverlauf eine zweite Standardabweichung bestimmt, und die Echtheit des Sicherheitselements in Abhängigkeit der ersten und zweiten Standardabweichung bewertet. Beispielsweise kann die Echtheit des Sicherheitselements in Abhängigkeit der Differenz der ersten und zweiten Standardabweichung bewertet werden. Falls diese Differenz eine bestimmte Schwelle überschreitet, wird das Sicherheitselement als echt bewertet, und falls diese Differenz die bestimmte Schwelle nicht überschreitet, wird das Sicherheitselement als falsch bewertet.

Alternativ oder zusätzlich zu den beiden Ausführungsbeispielen kann der Kombinationsverlauf, insbesondere der erste und/oder der zweite Kombinationsverlauf, auch dadurch auf seine Intensitätsmodulation geprüft werden, dass eine Ortsabhängigkeit des jeweiligen Kombinationsverlaufs entlang der Längsrichtung des Sicherheitselements mit einer für das Sicherheitselement erwarteten Ortsabhängigkeit verglichen wird, und in Abhängigkeit der Ähnlichkeit dieser Ortsabhängigkeiten das Sicherheitselement als echt oder falsch bewertet wird. Bei ausreichender Ähnlichkeit der detektierten Ortsabhängigkeit mit der erwarteten Ortsabhängigkeit wird das Sicherheitselement als echt bewertet und bei einer zu großen Abweichung der detektierten Ortsabhängigkeit von der erwarteten wird das Sicherheitselement als falsch bewertet. Das Vergleichen der detektierten mit der erwarteten Ortsabhängigkeit kann z.B. durch Mustervergleich, durch Berechnung der Distanz oder mittels Korrelation durchgeführt werden. Vor dem Vergleichen kann eine relative Verschiebung der beiden Ortsabhängigkeiten s entlang der Längsrichtung des Sicherheitselements erfolgen.

Im Fall des binären Remissionsverlaufs und des binären Transmissionsverlaufs können der aus dem binären Remissionsverlauf und dem binären Transmissionsverlauf berechnete erste und zweite Kombinationsverlauf dadurch auf ihre Intensitätsmodulation geprüft werden, dass eine erste Summe $\sum((R(x)-(T(x))$ durch Addieren der Intensitätswerte des ersten Kombinationsverlaufs berechnet wird und eine zweite Summe $\sum(R(x)+T(x))$ durch Addieren der Intensitätswerte des zweiten Kombinationsverlaufs berechnet wird, und die Echtheit des Sicherheitselements in Abhängigkeit der ersten und zweiten Summe bewertet wird. Das Sicherheitselement wird dann als falsch bewertet, falls die erste Summe eine erste Schwelle nicht überschreitet und/oder die zweite Summe eine zweite Schwelle überschreitet, und nur dann als echt, falls sowohl die erste Summe diese erste Schwelle überschreitet als auch die zweite Summe diese zweite Schwelle nicht überschreitet. Für die erste und zweite Schwelle kann dieselbe Schwelle oder zwei verschiedene Schwellen verwendet werden.

Optional kann in dem Fall, wenn das Sicherheitselement eine Intensitätsmodulation aufweist, zusätzlich die Periode der Intensitätsmodulation überprüft werden, wobei diese mit einer für das jeweilige Sicherheitselement zu erwartenden Periode verglichen wird. Die Periode der Intensitätsmodulation wird bevorzugt anhand des binären Remissionsverlaufs und/oder anhand des binären Transmissionsverlaufs und/oder anhand des binären Kombinationsverlaufs ermittelt, der sich durch voneinander Subtrahieren des Remissionsverlaufs und des Transmissionsverlaufs ergibt.

Die erfindungsgemäße Vorrichtung zur Echtheitsprüfung des Sicherheitselements weist auf: mindestens einen Sensor zur Erfassung von entlang der Längsrichtung eines Sicherheitselements ausgehender elektromagnetischer Strahlung und zur Erzeugung eines der Intensität der erfassten elektromagnetischen Strahlung entsprechenden Remissions- und Transmissionsverlaufs entlang der einen Dimension des Sicherheitselements sowie eine Auswertungseinrichtung, die zur Echtheitsprüfung des Sicherheitselements gemäß dem oben beschriebenen Verfahren ausgebildet ist, z.B. entsprechend programmiert ist.

Die Vorrichtung kann jeweils einen Sensor für Remission und ein Sensor für Transmission aufweisen, z.B. einen Bildsensor zur Erzeugung eines Remissionsbilds und einen weiteren Bildsensor zur Erzeugung des Transmissionsbilds des Wertdokuments. Zusätzlich kann ein weiterer Bildsensor verwendet werden, um auch einen weiteren Remissionsverlauf der gegenüberliegenden Wertdokumentseite zu erzeugen. Das Remissions- und das Transmissionsbild können statisch (d.h. während das Wertdokument ruht) oder während eines Transports des Wertdokuments aufgenommen werden.

Für den Remissionsverlauf entlang der Längsrichtung des Sicherheitselements kann der von einer Seite des Wertdokuments detektierte Remissionsverlauf verwendet werden. Alternativ kann für den Remissionsverlauf auch pixelweise die Summe der Intensitäten der von beiden einander gegenüberliegenden Seiten des Sicherheitselements remittierten Intensität verwendet werden.

Alternativ kann die Vorrichtung auch einen einzigen Sensor, z.B. Bildsensor, aufweisen, der sowohl den Remissions- als auch den Transmissionsverlauf detektiert, z.B. nacheinander durch wechselweise Beleuchtung des Wertdokuments von beiden gegenüberliegenden Seiten. Dazu werden zwei Beleuchtungseinrichtungen auf den beiden gegenüberliegenden Seiten des Wertdokuments verwendet. Mit den beiden Beleuchtungen wird das Wertdokument jeweils in demselben Bereich wechselweise beleuchtet, was über eine entsprechende Ansteuerung der beiden Beleuchtungseinrichtungen realisiert wird. Der einzige Bildsensor misst nun entsprechend wechselweise mal das von der ersten Beleuchtungseinrichtung auf das Wertdokument gestrahlte und von dieser remittierte Licht und mal das von der zweiten Beleuchtungseinrichtung auf der gegenüberliegenden Seite auf das Wertdokument gestrahlte und durch das Wertdokument transmittierte Licht. Der Beleuchtungstakt ist hierbei relativ zum Takt der Detektion so schnell gewählt, das an jedem Messort entlang einer Messspur sowohl ein Intensitätssignal für die Remission als auch ein Intensitätssignal für die Transmission gemessen wird. D.h. es liegen wiederum für jedes einzelne Wertdokument vollflächige Bilder der Intensitätswerte bezüglich der Remission als auch der Transmission vor.

Die erfindungsgemäße Wertdokumentbearbeitungsvorrichtung ist z.B. eine Vorrichtung zum Bearbeiten, insbesondere zum Prüfen und/oder Zählen und/oder Sortieren, von Wertdokumenten, insbesondere von Banknoten. Zur Echtheitsprüfung der zu bearbeitenden Wertdokumente weist die Wertdokumentbearbeitungsvorrichtung eine erfindungsgemäße Vorrichtung zur Echtheitsprüfung des Sicherheitselements der Wertdokumente auf. Zum Beispiel werden die Sicherheitselemente der Wertdokumente während der Wertdokumentbearbeitung durch die Wertdokumentbearbeitungsvorrichtung, mit Hilfe der erfindungsgemäßen Vorrichtung auf ihre Echtheit geprüft.

Weitere Vorteile, Merkmale und Anwendungsmöglichkeiten der vorliegenden Erfindung ergeben sich aus der nachfolgenden Beschreibung in Zusammenhang mit den Figuren. Es zeigen:

Fig. 1    ein Beispiel eines schematischen Aufbaus einer Wertdokumentbearbeitungsvorrichtung;

Fig. 2    ein Beispiel für ein Wertdokument in Form einer mit einem Fenster-Sicherheitsfaden versehenen Banknote;

Fig. 3    Beispiele für das von einem konventionellen Sicherheitsfaden (Fig. 3a) und einem Fenster-Sicherheitsfaden mit Mikrolinsen (Fig. 3b) beobachtete Transmissionsbild sowie für das Remissionsbild desselben (Fig. 3c),

Fig. 4    der Transmissionsverlauf (Fig. 4a), der Remissionsverlauf (Fig. 4b) sowie ein erster (Fig. 4c) und zweiter (Fig. 4d) Kombinationsverlauf für den Fenster-Sicherheitsfaden aus Fig. 3b, 3c,

Fig. 5    der binärisierte Transmissionsverlauf (Fig. 5a), der binärisierte Remissionsverlauf (Fig. 5b) sowie ein aus diesen binären Verläufen berechneter erster (Fig. 5c) und zweiter (Fig. 5d) Kombinationsverlauf für den Fenster-Sicherheitsfaden aus Fig. 3b,3c.

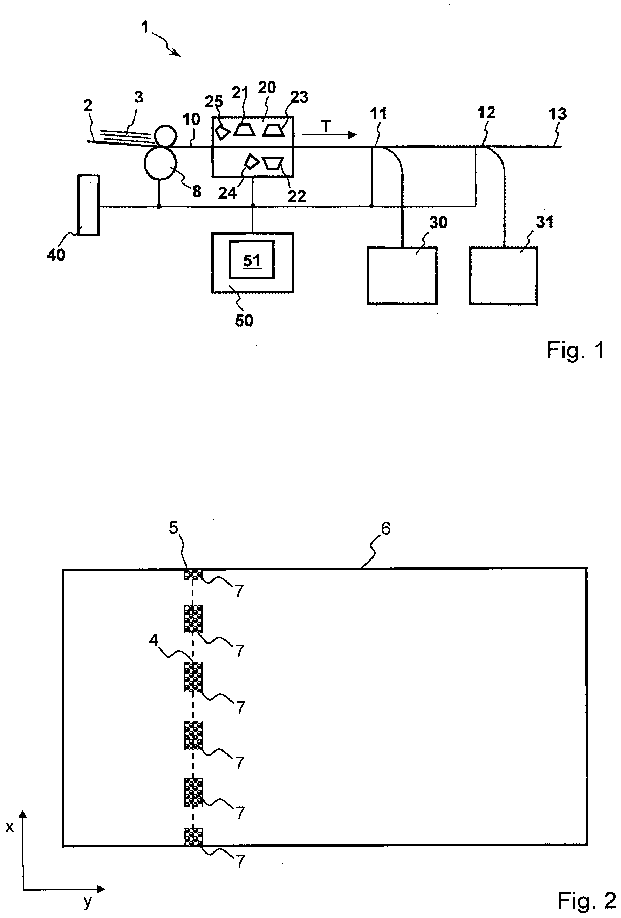

Fig. 1 zeigt ein Beispiel eines schematischen Aufbaus einer Wertdokumentbearbeitungsvorrichtung 1 mit einem Eingabefach 2, in welchem ein Stapel von zu bearbeitenden Wertdokumenten, insbesondere Banknoten 3, bereitgestellt wird, und einem Vereinzeler 8, von welchem nacheinander jeweils eine (z.B. die jeweils unterste) Banknote des eingegebenen Stapels erfasst und an eine - in der gewählten Darstellung nur schematisch wiedergegebene - Transporteinrichtung 10 übergeben wird, welche die Banknote in Transportrichtung T zu einer Sensoreinrichtung 20 befördert.

Die Sensoreinrichtung 20 umfasst im dargestellten Beispiel einen ersten, zweiten und dritten Sensor 21, 22 bzw. 23, die jeweils als sog. Zeilenkamera ausgebildet sind und von der Banknote ausgehendes Licht, insbesondere im sichtbaren und/oder infraroten und/oder ultravioletten Spektralbereich, mittels entlang einer Zeile angeordneter Sensorelemente erfassen und in entsprechende Sensorsignale umwandeln.

Im dargestellten Beispiel erfassen der erste und zweite Sensor 21 bzw. 22 von der Vorderseite bzw. Rückseite der Banknote remittiertes, d.h. diffus und/oder gerichtet reflektiertes, Licht. Die Beleuchtung der Banknote erfolgt mittels beidseitig der Banknote angeordneter Lichtquellen 24, 25. Der im Bereich der Vorderseite der Banknote befindliche dritte Sensor 23 erfasst das von der Lichtquelle 24 abgegebene, vorzugsweise schräg auf die Banknote treffende und durch die Banknote hindurchtretende, d.h. transmittierte, Licht. Die Sensoren 21-23 wandeln das detektierte Licht in entsprechende Sensorsignale um. Der erste und zweite Sensor 21 bzw. 22 werden daher auch als Remissionssensor und der dritte Sensor 23 wird daher auch als Dunkelfeld-Transmissionssensor bezeichnet.

Vorzugsweise verläuft die Zeile mit den Sensorelementen des jeweiligen Sensors 21, 22 bzw. 23 im Wesentlichen senkrecht zur Transportrichtung T der Banknoten, so dass bei jedem Auslesevorgang der Sensorzeile des jeweiligen Sensors 21, 22 ein Remissionsverlauf bzw. bei dem Sensor 23 ein Transmissionsverlauf entlang der Sensorzeile erhalten wird. Dieser entspricht dem Intensitätsverlauf des Lichts, das in einer senkrecht zur Transportrichtung T verlaufenden Richtung x von der Banknote remittiert bzw. transmittiert wird. Die von den Sensoren 21 bis 23 der Sensoreinrichtung 20 erzeugten Sensorsignale, insbesondere der Remissions- und der Transmissionsverlauf, werden an eine Steuerungseinrichtung 50 sowie eine Auswertungseinrichtung 51 weitergeleitet. Die Auswertungseinrichtung 51 kann in der Steuerungseinrichtung 50 enthalten sein oder aber auch eine von der Steuerungseinrichtung 50 separate Einheit bilden. Die Auswertungseinrichtung 51 kann alternativ auch in die Sensoreinrichtung 20 integriert sein.

In der Auswertungseinrichtung 51 werden die Sensorsignale nach einer etwaigen Vorverarbeitung zur Prüfung der Banknote herangezogen, wobei aus den jeweiligen Sensorsignalen Aussagen über verschiedene Eigenschaften der jeweiligen Banknote abgeleitet werden, wie z. B. Stückelung, Emission, Lage, Länge und Breite, Infraroteigenschaften, Wasserzeichen, Vorhandensein bzw. Eigenschaften von Sicherheitselementen, wie z. B. Sicherheitsfäden und/oder Hologrammen, Löcher, Risse und fehlende Teile, Verschmutzungsgrad, Eselsohren, Flecken, Graffiti sowie ganzflächige Einfärbungen, Abrieb der Druckfarbe und Seriennummer.

Abhängig von den in der Auswertungseinrichtung 51 ermittelten Eigenschaften der jeweiligen Banknote werden die Transporteinrichtung 10 sowie die Weichen 11 und 12 entlang der Transportstrecke durch die Steuerungseinrichtung 50 derart gesteuert, dass die Banknote einem von mehreren Ausgabefächern 30 und 31 zugeführt und dort abgelegt wird. Beispielsweise werden in einem ersten Ausgabefach 30 Banknoten abgelegt, die als echt erkannt wurden, während als falsch oder fälschungsverdächtig eingestufte Banknoten in einem zweiten Ausgabefach 31 abgelegt werden. Die Echtheit der Banknoten wird dabei in Abhängigkeit mehrerer Echtheitskriterien bewertet, wobei eines dieser Echtheitskriterien die im Weiteren beschriebene Intensitätsmodulation des Kombinationsverlaufs des Fenster-Sicherheitselements ist. Nur falls alle Echtheitskriterien erfüllt sind, wird die jeweilige Banknote als echt bewertet und in das erste Ausgabefach 30 sortiert.

Durch die Bezugsziffer 13 am Ende der dargestellten Transportstrecke soll angedeutet werden, dass weitere Ausgabefächer und/oder andere Einrichtungen, beispielsweise zur Aufbewahrung oder zur Zerstörung von Banknoten, vorgesehen sein können, wie z. B. Kassetten zur geschützten Aufbewahrung der Banknoten oder ein Schredder. Falls beispielsweise eine Banknote nicht erkannt werden konnte, so kann für diese ein besonderes Ausgabefach vorgesehen sein, in welches derartige Banknoten abgelegt und für eine gesonderte Behandlung, beispielsweise durch eine Bedienperson, bereitgestellt werden.

Die Wertdokumentbearbeitungsvorrichtung 1 umfasst im dargestellten Beispiel ferner eine Ein-/ Ausgabeeinrichtung 40 zur Eingabe von Daten und/oder Steuerungsbefehlen durch eine Bedienperson, beispielsweise mittels einer Tastatur oder eines Touchscreens, und Ausgabe oder Anzeige von Daten und/ oder Informationen zum Bearbeitungsprozess, insbesondere zu den jeweils bearbeiteten Banknoten.

Das beispielhaft gezeigte Wertdokumentbearbeitungsvorrichtung 1 ist besonders dazu geeignet, auf Wertdokumenten befindliche Sicherheitselemente, wie z.B. Sicherheitsfäden, auf ihre Echtheit zu prüfen, um Rückschlüsse auf die Echtheit des jeweiligen Wertdokuments zu ermöglichen. Dies wird im Folgenden näher erläutert.

Fig. 2 zeigt ein Beispiel für ein Wertdokument in Form einer Banknote 6, welche mit einem Sicherheitselement 5 versehen ist. In dem gezeigten Beispiel handelt es sich bei dem Sicherheitselement 5 um einen Fenster-Sicherheitsfaden 5, welcher im vorliegenden Beispiel mit seiner Längsrichtung entlang einer ersten Dimension x parallel zur schmalen Seite der Banknote 6 verläuft. Der Sicherheitsfaden 5 ist teilweise in das Banknotensubstrat eingebettet. An den Fenstern 7 liegt der Sicherheitsfaden 5 über dem Substrat und für den Betrachter sichtbar. An den zwischen den Fenstern 7 befindlichen Stellen befindet sich der Sicherheitsfaden 5 innerhalb des Banknotensubstrats, z.B. zwischen zwei Papierlagen, so dass er dort in Remission nicht oder nur sehr schwach sichtbar ist.

Der Sicherheitsfaden 5 weist zur Erhöhung seiner Fälschungssicherheit einen optisch variablen Effekt auf, der für den menschlichen Betrachter beim Kippen der Banknote 6 beobachtbar ist. Der optisch variable Effekt wird durch ein Raster aus Mikrolinsen erzeugt, hinter denen sich ein geeignetes Motiv befindet, z.B. ebenfalls rasterförmig aufgedruckte Zeichen oder Muster oder Teile davon.

Mit den Sensoren 21, 22, 23 wird das entlang einer Dimension des jeweiligen Sicherheitselements 5 ausgehende Licht erfasst, beispielsweise durch Detektion des Remissions- und des Transmissionsbilds der Banknote 6. Aus dem erfassten Remissionsbild des Sensors 21 und/oder des Sensors 22 wird der Remissionsverlauf und aus dem Transmissionsbild des Sensors 23 Transmissionsverlauf entlang der Längsrichtung des Sicherheitsfadens 5 bestimmt. Dieser Remissions- und Transmissionsverlauf werden der Auswertungseinrichtung 51 zugeführt und dort zum Zwecke der Echtheitsprüfung des Sicherheitsfadens 5 bzw. der Banknote 6 analysiert. Vorzugsweise wird für den Remissions- bzw. Transmissionsverlauf die im Bereich der Mitte des Sicherheitsfadens 5 remittierte bzw. transmittierte Intensität verwendet. Die Sensorzeile des entsprechenden Sensors 21, 22 bzw. 23 (siehe Fig. 1) verläuft hierbei im Wesentlichen entlang der in der Fig. 2 gestrichelt angedeuteten Mittelinie 4 des Sicherheitsfadens 5.

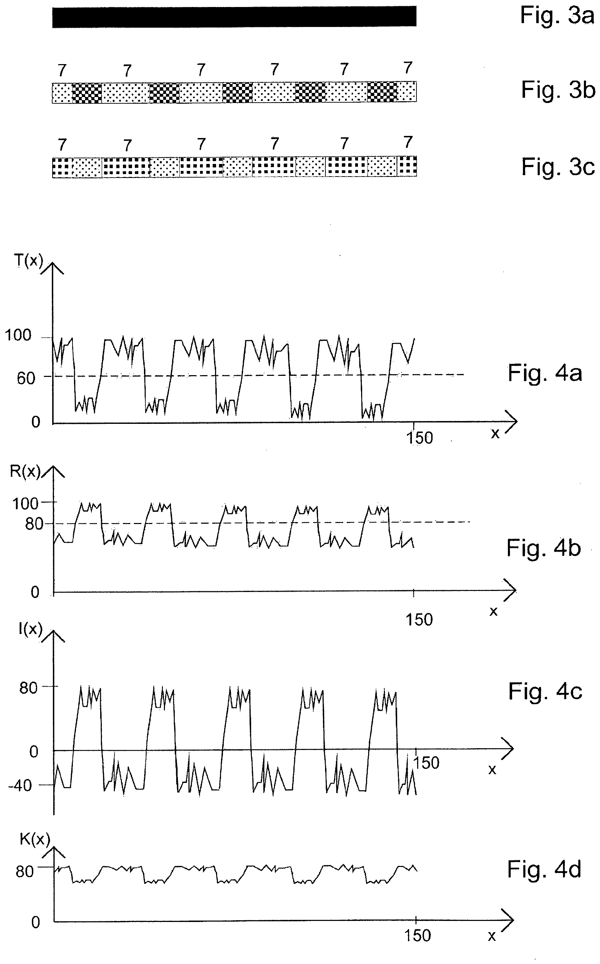

In Fig. 3a ist das Infrarot-Transmissionsbild eines konventionellen Sicherheitsfadens skizziert, der typischerweise eine lichtundurchlässige Metallschicht, aber kein Mikrolinsenraster oder ähnliches aufweist. Aufgrund der Metallschicht erscheint der konventionelle Sicherheitsfaden in Transmission schwarz.

In Fig. 3b ist das Infrarot-Transmissionsbild eines teilweise lichtdurchlässigen Fenster-Sicherheitsfadens skizziert, der keine solche Metallschicht aufweist, aber mit einem Mikrolinsenraster ausgestattet ist. Zur Darstellung der unterschiedlichen Intensitäten wurden in Fig. 3b und Fig. 3c, an Stelle von Graustufen, Schraffuren mit unterschiedlicher Punktdichte verwendet. Im Gegensatz zum konventionellen Sicherheitsfaden erscheint dieser Sicherheitsfaden im Infrarot-Transmissionsbild nicht durchgehend schwarz, sondern weist eine deutliche Hell-Dunkel-Modulation auf. An den Fenstern 7 weist der Fenster-Sicherheitsfaden eine erhöhte Transmissionsintensität auf im Vergleich zu den zwischen den Fenstern liegenden Bereichen, die relativ dunkel erscheinen. Die Stärke der Hell-Dunkel-Modulation hängt von der Beschaffenheit des Sicherheitsfadens, von der Einbettung des Sicherheitsfadens in das Wertdokument-Substrat und vom detektiertem Spektralbereich ab.

In Fig. 3c ist das Infrarot-Remissionsbild des Fenster-Sicherheitsfadens aus Fig. 3b skizziert. Auch in Remission zeigt sich eine Hell-Dunkel-Modulation, allerdings liegen die hellen Bereiche - gerade umgekehrt zum Transmissionsbild - bei der Remission in den Bereichen zwischen den Fenstern 7, während der Sicherheitsfaden in den Fenstern 7 dunkler erscheint.

Im Gegensatz dazu würde man bei einem gefälschten Fenster-Sicherheitsfaden, der durch einen periodischen Hell-Dunkel-Aufdruck auf das Wertdokument gebildet wird, in Transmission und Remission keine solche umgekehrte (gegenphasige) Hell-Dunkel-Modulation beobachten. Sondern ein solcher gefälschter Sicherheitsfaden hätte allenfalls eine ähnliche (gleichphasige) Hell-Dunkel-Modulation in Transmission und Remission.

Fig. 4a zeigt den Transmissionsverlauf T(x), Fig. 4b den Remissionsverlauf R(x) des Sicherheitsfadens aus Fig. 3b, 3c entlang der Längsrichtung x des Sicherheitsfadens, der im Infraroten Spektralbereich detektiert wurde. Dabei wurde das Remissionsbild bzw. Transmissionsbild eines drei Pixel breiten Streifens in der Mitte des Sicherheitsfadens zu einem einzigen Remissionsverlauf bzw. Transmissionsverlauf zusammengefasst, durch Mittelung der Intensität jeweils drei nebeneinander liegender Pixel. Der Remissions-und Transmissionsverlauf erstrecken sich jeweils über eine Länge von 150 Pixel des Remissions- bzw. Transmissionsbilds, entsprechend der Breite des Wertdokuments entlang der x-Richtung. Die Intensität der beiden Verläufe wurden jeweils auf die maximale Intensität normiert und mit 100 multipliziert, so dass bei beiden Verläufen jeweils die hellsten Bereiche eine Intensität von 100 aufweisen. Zusätzlich ist in Fig. 4a gestrichelt der Mittelwert des Transmissionsverlaufs eingezeichnet, der etwa bei 60 liegt, und in Fig. 4b der Mittelwert des Remissionsverlaufs, der etwa bei 80 liegt.

In Fig. 4c ist ein Kombinationsverlauf I(x)=R(x)-T(x) gezeigt, der sich durch pixelweise Subtrahieren des Transmissionsverlaufs von dem Remissionsverlauf berechnet. Das pixelweise Subtrahieren führt zu einer Verstärkung der beiden Hell-Dunkel-Modulationen, so dass der Kombinationsverlauf I(x) eine noch deutlichere Hell-Dunkel-Modulation aufweist.

In Fig. 4d ist ein weiterer Kombinationsverlauf K(x)=(R(x)+T(x))/2 gezeigt, der sich durch pixelweise Addieren des Transmissionsverlaufs und des Remissionsverlaufs berechnet. Die addierten Intensitäten wurden in diesem Beispiel nach dem Addieren halbiert, um die Skala von maximal 100 zu erhalten. Das pixelweise Addieren führt zu einer Abschwächung der beiden Modulationen, so dass der Kombinationsverlauf K(x) nur noch eine sehr geringe Hell-Dunkel-Modulation aufweist. Je nach Beschaffenheit des Sicherheitsfadens, je nach Einbettung in das Wertdokument-Substrat und je nach detektiertem Spektralbereich kann sich beim pixelweise Addieren auch sogar eine Auslöschung der beiden Hell-Dunkel-Modulation ergeben.

Zur Echtheitsprüfung des Sicherheitsfadens können der Kombinationsverlauf I(x) oder der Kombinationsverlauf K(x) oder beide auf ihre Hell-Dunkel-Modulation geprüft werden. In einem ersten Ausführungsbeispiel wird zu diesem Zweck die Standardabweichung des jeweiligen Kombinationsverlaufs entlang der Längsrichtung x des Sicherheitsfadens gebildet. In dem Beispiel aus Fig. 4a-d ergibt sich für den Kombinationsverlauf I(x) eine Standardabweichung von Std(I)=60 und für den Kombinationsverlauf K(x) eine Standardabweichung von Std(K)=20. Beispielsweise wird dann zur Echtheitsprüfung die Differenz D der beiden Standardabweichungen D=Std(I)-Std(K) berechnet und diese Differenz D=60-20=40 mit einer Schwelle verglichen, die beispielsweise bei 30 liegt. Aufgrund des Überschreitens D>30 würde der Sicherheitsfaden im vorliegenden Beispiel als echt bewertet. Alternativ können die beiden Standardabweichungen Std(I) und Std(K) auch einzeln jeweils mit einer für sie gültigen Schwelle verglichen werden und nur dann, wenn Std(I) über ihrer Schwelle liegt und gleichzeitig Std(K) unter ihrer Schwelle liegt, würde der Sicherheitsfaden als echt bewertet werden, ansonsten als falsch.

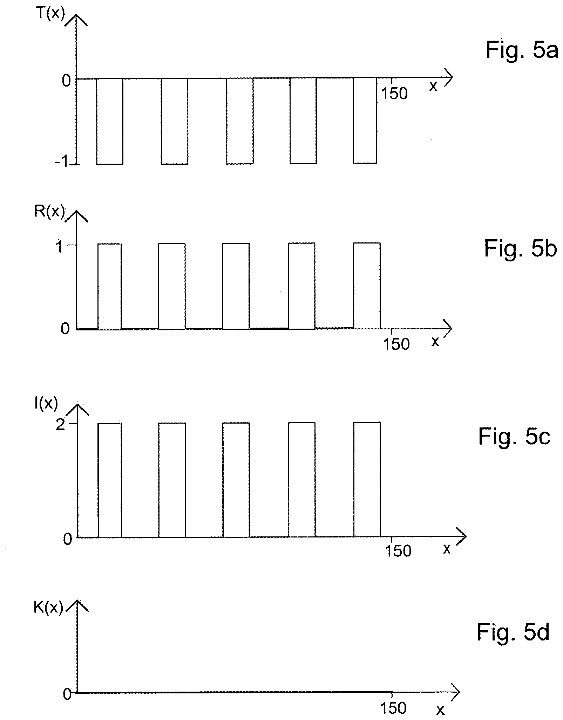

In einem zweiten Ausführungsbeispiel werden der Remissions- und Transmissionsverlauf für die Echtheitsprüfung binärisiert. Aus dem Remissions-und Transmissionsverlauf wird jeweils ein binärer Intensitätsverlauf erzeugt, dessen Intensitäten entlang der Längsrichtung des Wertdokuments lediglich zwei unterschiedliche Werte annehmen kann. Die einzelnen Intensitätswerte des binären Remissions- und Transmissionsverlaufs entlang der Längsrichtung des Wertdokuments nehmen z.B. nur jeweils einen von zwei Binärwerten an. Die Binärisierung kann z.B. dadurch erfolgen, dass der Remissions- bzw. Transmissionsverlauf mit einer Schwelle verglichen wird. Diese Schwelle kann z.B. jeweils der Mittelwert des Remissions- bzw. Transmissionsverlaufs, also bei dem Transmissionsverlauf aus Fig. 4a die Schwelle 60 und bei dem Remissionsverlauf aus Fig. 4b die Schwelle 80. Liegt der Intensitätswert an der jeweiligen Position x über der ersten Schwelle, wird der zugehörige Intensitätswert des binären Remissions- bzw. Transmissionsverlaufs z.B. auf den oberen Binärwert gesetzt. Liegt der Intensitätswert an der jeweiligen Position x dagegen nicht über der ersten Schwelle, wird der zugehörige Intensitätswert des binären Remissions- bzw. Transmissionsverlaufs z.B. auf den unteren Binärwert gesetzt. Den auf diese Weise binärisierten Transmissionsverlauf zeigt Fig. 5a, wobei die beiden Binärwerte 0 und -1 gewählt wurden. Und den auf diese Weise binärisierten Remissionsverlauf zeigt Fig. 5b, wobei die beiden Binärwerte 0 und 1 gewählt wurden.

Aus dem binärisierten Remissionsverlauf und dem binärisierten Transmissionsverlauf wird durch pixelweise Subtrahieren der Kombinationsverlauf I(x)=R(x)-T(x) aus Fig. 5c erhalten, der eine verstärkte Modulation aufweist, deren Intensitätswerte 0 und 2 betragen. Und durch pixelweise Addieren ergibt sich der Kombinationsverlauf K(x)=T(x)+R(x) aus Fig. 5d. Dieser liegt entlang der Längsrichtung x des Sicherheitsfadens durchgehend bei Null, d.h. die beiden Modulationen des binären Remissionsverlaufs und des binären Transmissionsverlaufs löschen sich aus.

Zur Echtheitsprüfung des Sicherheitselements wird im zweiten Ausführungsbeispiel jeweils pixelweise die Summe der Intensitätswerte des Kombinationsverlaufs I(x) und K(x) entlang der Längsrichtung x des Sicherheitselements (von x=0 bis x=150) berechnet und diese Summe mit einer Schwelle verglichen. Für den Kombinationsverlauf I(x) ergibt sich im vorliegenden Beispiel eine Summe von

$$\sum I(x) = \sum_{x=1}^{150} (R(x) - T(x)) = 150$$

und für den Kombinationsverlauf K(x) eine Summe von

$$\sum K(x) = \sum_{x=1}^{150} (R(x) + T(x)) = 0$$

Diese beiden Summen werden jeweils mit einer Schwelle verglichen, z.B. mit der Schwelle T=90. Da im vorliegenden Fall $\sum I(x) > T$ und $\sum K(x) < T$ ist, wird der geprüften Sicherheitsfaden als echt bewertet. Falls jedoch entweder $\sum I(x) < T$ oder $\sum K(x) > T$ oder beides zutrifft, würde der Sicherheitsfaden als gefälscht bewertet werden.

**Patentansprüche**

1. Verfahren zur Echtheitsprüfung eines Sicherheitselements, insbesondere des Fenster-Sicherheitselements eines Wertdokuments, mit Hilfe mindestens eines Sensors (21, 22, 23) zur Erfassung der von dem Sicherheitselement (5) remittierten und der durch das Sicherheitselement (5) transmittierten elektromagnetischen Strahlung und zur Erzeugung eines Remissionsverlaufs (R(x)), der der entlang der Längsrichtung (x) des Sicherheitselements (5) remittierten Intensität entspricht und eines Transmissionsverlaufs (T(x)), der der entlang der Längsrichtung (x) des Sicherheitselements (5) transmittierten Intensität entspricht, wobei bei der Echtheitsprüfung des Sicherheitselements

   a) der Remissionsverlauf (R(x)) und der Transmissionsverlauf (T(x)) zur Bestimmung eines Kombinationsverlaufs (I(x), K(x)) entlang der Längsrichtung des Sicherheitselements pixelweise miteinander verrechnet werden, und **dadurch gekennzeichnet, dass** bei der Echtheitsprüfung des Sicherheitselements
   b) der durch das pixelweise Verrechnen erhaltenen Kombinationsverlauf (I(x), K(x)) im Hinblick auf eine Intensitätsmodulation entlang der Längsrichtung (x) des Sicherheitselements (5) geprüft wird, und
   c) die Echtheit des Sicherheitselements in Abhängigkeit der Intensitätsmodulation des Kombinationsverlaufs (I(x), K(x)) bewertet wird.

2. Verfahren gemäß Anspruch 1, **dadurch gekennzeichnet, dass** vor Beginn der Echtheitsprüfung die Identität des Wertdokuments bestimmt wird und die Auswertungseinrichtung dazu ausgebildet ist, bei der Echtheitsprüfung des Sicherheitselements die Schritte a), b) und c) in Abhängigkeit der Identität des Wertdokuments durchzuführen.

3. Verfahren gemäß einem der vorhergehenden Ansprüche, **dadurch gekennzeichnet, dass** zur Bestimmung des Kombinationsverlaufs (K(x)) der Remissionsverlauf (R(x)) und der Transmissionsverlauf (T(x)) entlang der Längsrichtung des Sicherheitselements pixelweise miteinander addiert werden.

4. Verfahren gemäß einem der vorhergehenden Ansprüche, **dadurch gekennzeichnet, dass** zur Bestimmung des Kombinationsverlaufs (I(x)) der Remissionsverlauf (R(x)) und der Transmissionsverlauf (T(x)) entlang der Längsrichtung des Sicherheitselements pixelweise voneinander subtrahiert werden.

5. Verfahren gemäß einem der vorhergehenden Ansprüche, **dadurch gekennzeichnet, dass** der Remissionsverlauf (R(x)) und/oder der Transmissionsverlauf (T(x)) vor Durchführung der Schritte a), b) und c) dahingehend geprüft werden, ob diese eine Intensitätsmodulation mit einer bestimmten Mindest-Modulationsamplitude überschreiten und in dem Fall, wenn der Remissionsverlauf und/oder der Transmissionsverlauf die Mindest-Modulationsamplitude überschreiten, zur Echtheitsprüfung des Sicherheitselements die genannten Schritte a), b) und c) durchgeführt werden und in dem Fall, wenn der Remissionsverlauf und/oder der Transmissionsverlauf die Mindest-Modulationsamplitude nicht überschreiten, das Sicherheitselement als falsch bewertet wird.

6. Verfahren gemäß einem der vorhergehenden Ansprüche, **dadurch gekennzeichnet, dass** das Sicherheitselement ein Fenster-Sicherheitselement eines Wertdokuments ist, beispielsweise ein Fenster-Sicherheitsfaden (5), der insbesondere mit einem Mikrolinsenraster ausgestattet ist.

7. Verfahren gemäß einem der vorhergehenden Ansprüche, **dadurch gekennzeichnet, dass** der Kombinationsverlauf (I(x), K(x)) dadurch auf eine Intensitätsmodulation geprüft wird, dass die Standardabweichung des Kombinationsverlaufs entlang der Längsrichtung des Sicherheitselements bestimmt wird, und diese Standardabweichung mit einer Schwelle verglichen wird, wobei das Sicherheitselement in Abhängigkeit davon, ob die Standardabweichung die Schwelle überschreitet oder nicht überschreitet, als echt oder falsch bewertet wird.

8. Verfahren gemäß einem der vorhergehenden Ansprüche, **dadurch gekennzeichnet, dass** der Remissionsverlauf ein binärer Remissionsverlauf ist und der Transmissionsverlauf ein binärer Transmissionsverlauf ist, die aus dem Remissionsverlauf und aus dem Transmissionsverlauf jeweils durch Binärisieren berechnet werden und entlang der Längsrichtung (x) des Sicherheitselements (5) jeweils nur zwei unterschiedliche Intensitätswerte aufweisen, und dass zur Bestimmung des Kombinationsverlaufs (I(x), K(x)) der binäre Remissionsverlauf entlang der Längsrichtung des Sicherheitselements (x) pixelweise mit dem binären Transmissionsverlauf verrechnet wird.

9. Verfahren gemäß Anspruch 8, **dadurch gekennzeichnet, dass** der aus dem binären Remissionsverlauf und dem binären Transmissionsverlauf berechnete Kombinationsverlauf (I(x), K(x)) dadurch auf eine Intensitätsmodulation geprüft wird, dass pixelweise die Summe der Intensitätswerte des Kombinationsverlaufs entlang der Längsrichtung (x) des Sicherheitselements berechnet und mit einer Schwelle verglichen wird und das Sicherheitselement in Abhängigkeit davon, ob die berechnete Summe eine Schwelle überschreitet oder nicht überschreitet, als falsch oder echt bewertet wird.

10. Verfahren gemäß einem der vorhergehenden Ansprüche, **dadurch gekennzeichnet, dass** der Remissionsverlauf (R(x)) und der Transmissionsverlauf (T(x)) zur Bestimmung eines ersten Kombinationsverlaufs I(x) entlang der Längsrichtung des Sicherheitselements pixelweise voneinander subtrahiert werden und der Remissionsverlauf (R(x)) und der Transmissionsverlauf (T(x)) zur Bestimmung eines zweiten Kombinationsverlaufs (K(x)) entlang der Längsrichtung des Sicherheitselements pixelweise miteinander addiert werden, und sowohl der erste Kombinationsverlauf (I(x)) als auch der zweite Kombinationsverlauf (K(x)) im Hinblick auf ihre Intensitätsmodulation geprüft werden, und die Echtheit des Sicherheitselements (5) in Abhängigkeit der Intensitätsmodulation des ersten Kombinationsverlaufs (I(x)) und in Abhängigkeit der Intensitätsmodulation des zweiten Kombinationsverlaufs (K(x)) bewertet wird.

11. Verfahren gemäß Anspruch 10, **dadurch gekennzeichnet, dass** für den ersten Kombinationsverlauf (I(x)) eine erste Standardabweichung bestimmt wird, und für den zweiten Kombinationsverlauf (K(x)) eine zweite Standardabweichung bestimmt wird, und die Echtheit des Sicherheitselements in Abhängigkeit der ersten und zweiten Standardabweichung bewertet wird.

12. Verfahren gemäß einem der Ansprüche 10 bis 11, **dadurch gekennzeichnet, dass** der Kombinationsverlauf, insbesondere der erste und/oder zweite Kombinationsverlauf, dadurch auf eine Intensitätsmodulation geprüft wird, dass eine Ortsabhängigkeit des jeweiligen Kombinationsverlaufs entlang der Längsrichtung des Sicherheitselements mit einer für das Sicherheitselement erwarteten Ortsabhängigkeit verglichen wird und in Abhängigkeit der Ähnlichkeit dieser Ortsabhängigkeiten das Sicherheitselement als echt oder falsch bewertet wird.

13. Verfahren gemäß einem der einem der Ansprüche 10 bis 12, **dadurch gekennzeichnet, dass** der zur Bestimmung des ersten und zweiten Kombinationsverlaufs verwendete Remissionsverlauf und Transmissionsverlauf, deren Intensitätswerte pixelweise miteinander verrechnet werden, ein binärer Remissionsverlauf und ein binärer Transmissionsverlauf sind, und dass der aus dem binären Remissionsverlauf und dem binären Transmissionsverlauf berechnete erste und zweite Kombinationsverlauf dadurch auf ihre Intensitätsmodulation geprüft werden, dass eine erste Summe ($\sum I(x)$) durch Addieren der Intensitätswerte des ersten Kombinationsverlaufs (I(x)) berechnet wird und eine zweite Summe ($\sum K(x)$) durch Addieren der Intensitätswerte des zweiten Kombinationsverlaufs (K(x)) berechnet wird, und die Echtheit des Sicherheitselements in Abhängigkeit der ersten ($\sum I(x)$) und zweiten Summe ($\sum K(x)$) bewertet wird.

14. Vorrichtung zur Echtheitsprüfung eines Sicherheitselements (5), insbesondere des Fenster-Sicherheitselements eines Wertdokuments, mit mindestens einem Sensor (21, 22, 23) zur Erfassung der von dem Sicherheitselement (5) remittierten und der durch das Sicherheitselement (5) transmittierten elektromagnetischen Strahlung und zur Erzeugung eines der remittierten Intensität entsprechenden Remissionsverlaufs (R(x)) und eines der transmittierten Intensität entsprechenden Transmissionsverlaufs (T(x)) entlang der Längsrichtung (x) des Sicherheitselements (5), **dadurch gekennzeichnet, dass** die Vorrichtung eine Auswertungseinrichtung (51) zur Echtheitsprüfung des Sicherheitselements aufweist, die dazu ausgebildet ist, die Schritte des Verfahrens gemäß Anspruch 1 auszuführen.

15. Wertdokumentbearbeitungsvorrichtung (1) zum Bearbeiten, insbesondere zum Prüfen und/oder Zählen und/oder Sortieren, von Wertdokumenten (3) und mit einer Vorrichtung (21 - 23, 51) gemäß Anspruch 14, die zur Echtheitsprüfung des Sicherheitselements (5) eines Wertdokuments ausgebildet ist.

**Claims**

1. A method for checking the authenticity of a security element, in particular of the window security element of a value document, with the help of at least one sensor (21, 22, 23) for capturing the electromagnetic radiation remitted by the security element (5) and transmitted through the security element (5) and for generating a remission course (R(x)) which corresponds to the intensity remitted along the longitudinal direction (x) of the security element (5) and a transmission course (T(x)) which corresponds to the intensity transmitted along the longitudinal direction (x) of the security element (5), wherein upon checking the authenticity of the security element

    a) the remission course (R(x)) and the transmission course (T(x)) are set off against each other pixel by pixel for determining a combination course (I(x), K(x)) along the longitudinal direction of the security element, and **characterized in that** upon checking the authenticity of the security element
    b) the combination course (I(x), K(x)) obtained by setting off pixel by pixel is checked with regard to an intensity modulation along the longitudinal direction (x) of the security element (5), and
    c) the authenticity of the security element is evaluated in dependence on the intensity modulation of the combination course (I(x), K(x)).

2. The method according to claim 1, **characterized in that** prior to the start of checking the authenticity the identity of the value document is determined and the evaluation device is configured to carry out upon checking the authenticity of the security element the steps a), b) and c) in dependence on the identity of the value document.

3. The method according to any of the preceding claims, **characterized in that** for determining the combination course (K(x)) the remission course (R(x)) and the transmission course (T(x)) along the longitudinal direction of the security element are added to each other pixel by pixel.

4. The method according to any of the preceding claims, **characterized in that** for determining the combination course (I(x)) the remission course (R(x)) and the transmission course (T(x)) along the longitudinal direction of the security element are subtracted from each other pixel by pixel.

5. The method according to any of the preceding claims, **characterized in that** prior to the carrying out of the steps a), b) and c) the remission course (R(x)) and/or the transmission course (T(x)) are checked as to whether these exceed an intensity modulation having a particular minimum modulation amplitude, and in the case that the remission course and/or the transmission course exceed the minimum modulation amplitude, for checking the authenticity of the security element the mentioned steps a), b) and c) are carried out, and in the case that the remission course and/or the transmission course do not exceed the minimum modulation amplitude, the security element is evaluated as false.

6. The method according to any of the preceding claims, **characterized in that** the security element is a window security element of a value document, for example a window security thread (5), which is equipped in particular with a microlens grid.

7. The method according to any of the preceding claims, **characterized in that** the combination course (I(x), K(x)) is checked for an intensity modulation **in that** the standard deviation of the combination course along the longitudinal direction of the security element is determined, and this standard deviation is compared with a threshold, wherein the security element is evaluated as authentic or false in dependence on whether the standard deviation exceeds the threshold or does not exceed it.

8. The method according to any of the preceding claims, **characterized in that** the remission course is a binary remission course and the transmission course is a binary transmission course which are respectively calculated from the remission course and from the transmission course by binarizing and have along the longitudinal direction (x) of the security element (5) respectively only two different intensity values, and that for determining the combination course (I(x), K(x)) the binary remission course along the longitudinal direction of the security element (x) is set off against the binary transmission course pixel by pixel.

9. The method according to claim 8, **characterized in that** the combination course (I(x), K(x)) calculated from the binary remission course and the binary transmission course is checked for an intensity modulation **in that** pixel by pixel the sum of the intensity values of the combination course along the longitudinal direction (x) of the security element is calculated and compared with a threshold and the security element is evaluated as false or authentic in dependence on whether the calculated sum exceeds a threshold or does not exceed it.

10. The method according to any of the preceding claims, **characterized in that** for determining a first combination course I(x) along the longitudinal direction of the security element the remission course (R(x)) and the transmission course (T(x)) are subtracted from each other pixel by pixel and for determining a second combination course (K(x)) along the longitudinal direction of the security element the remission course (R(x)) and the transmission course (T(x)) are added to each other pixel by pixel, and both the first combination course (I(x)) and the second combination course (K(x)) are checked with regard to their intensity modulation, and the authenticity of the security element (5) is evaluated in dependence on the intensity modulation of the first combination course (I(x)) and in dependence on the intensity modulation of the second combination course (K(x)).

11. The method according to claim 10, **characterized in that** for the first combination course (I(x)) a first standard deviation is determined, and for the second combination course (K(x)) a second standard deviation is determined, and the authenticity of the security element is evaluated in dependence on the first and second standard deviation.

12. The method according to any of claims 10 to 11, **characterized in that** the combination course, in particular the first and/or second combination course, is checked for an intensity modulation **in that** a location dependence of the respective combination course along the longitudinal direction of the security element is compared with a location dependence expected for the security element, and in dependence on the similarity of these location dependencies the security element is evaluated as authentic or false.

13. The method according to any of claims 10 to 12, **characterized in that** the remission course and transmission course used for determining the first and second combination course, whose intensity values are set off against each other pixel by pixel, are a binary remission course and a binary transmission course, and that the first and second combination course calculated from the binary remission course and the binary transmission course are checked for their intensity modulation **in that** a first sum $\sum(I(x))$ is calculated by addition of the intensity values of the first combination course (I(x)) and a second sum $\sum(K(x))$ is calculated by addition of the intensity values of the second combination course (K(x)), and the authenticity of the security element is evaluated in dependence on the first ($\sum I(x)$) and second sum ($\sum K(x)$).

14. An apparatus for checking the authenticity of a security element (5), in particular of the window security element of a value document, having at least one sensor (21, 22, 23) for capturing the electromagnetic radiation remitted by the security element (5) and transmitted through the security element (5) and for generating along the longitudinal direction (x) of the security element (5) a remission course (R(x)) corresponding to the remitted intensity and a transmission course (T(x)) corresponding to the transmitted intensity, **characterized in that** the apparatus has an evaluation device (51) for checking the authenticity of the security element, which is configured for executing the steps of the method according to claim 1.

15. A value-document processing apparatus (1) for processing, in particular for checking and/or counting and/or sorting, value documents (3) and with an apparatus (21 - 23, 51) according to claim 14 which is configured for checking the authenticity of the security element (5) of a value document.

**Revendications**

1. Procédé de vérification de l'authenticité d'un élément de sécurité, en particulier de l'élément de sécurité à fenêtre d'un document de valeur, à l'aide d'au moins un capteur (21, 22, 23) pour la saisie du rayonnement électromagnétique réémis par l'élément de sécurité (5) et de celui transmis par l'élément de sécurité (5), et pour l'établissement d'une courbe de réflectance (R(x)) correspondant à l'intensité réémise le long de la direction longitudinale (x) de l'élément de sécurité (5) et d'une courbe de transmission (T(x)) correspondant à l'intensité transmise le long de la direction longitudinale (x) de l'élément de sécurité (5), cependant que, lors de la vérification de l'authenticité de l'élément de sécurité

a) la courbe de réflectance (R(x)) et la courbe de transmission (T(x)) sont, pour la détermination d'une courbe de combinaison (I(x), K(x)) le long de la direction longitudinale (x) de l'élément de sécurité, mutuellement compensés par pixels, et **caractérisé en ce que**, lors de la vérification de l'authenticité de l'élément de sécurité,
b) la courbe de combinaison (I(x), K(x)) obtenue par la compensation mutuelle par pixels est vérifiée quant à une modulation d'intensité le long de la direction longitudinale (x) de l'élément de sécurité (5), et
c) l'authenticité de l'élément de sécurité est évaluée en fonction de la modulation d'intensité de la courbe de combinaison (I(x), K(x)).

2. Procédé selon la revendication 1, **caractérisé en ce que**, avant le début de la vérification de l'authenticité, l'identité du document de valeur est déterminée et l'équipement d'évaluation est conçu pour, lors de la vérification de l'authenticité de l'élément de sécurité, exécuter les étapes a), b) et c) en fonction de l'identité du document de valeur.

3. Procédé selon une des revendications précédentes, **caractérisé en ce que**, pour la détermination de la courbe de combinaison (K(x)), la courbe de réflectance (R(x)) et la courbe de transmission (T(x)) le long de la direction longitudinale de l'élément de sécurité sont additionnées l'une à l'autre par pixels.

4. Procédé selon une des revendications précédentes, **caractérisé en ce que**, pour la détermination de la courbe de combinaison (I(x)), la courbe de réflectance (R(x)) et la courbe de transmission (T(x)) le long de la direction longitudinale de l'élément de sécurité sont soustraites l'une de l'autre par pixels.

**5.** Procédé selon une des revendications précédentes, **caractérisé en ce que** la courbe de réflectance (R(x)) et/ou la courbe de transmission (T(x)) sont, pour l'exécution des étapes a), b) et c), vérifiées afin de distinguer si elles dépassent une modulation d'intensité à une amplitude minimum déterminée de modulation, et, dans le cas où la courbe de réflectance et/ou la courbe de transmission dépassent l'amplitude minimum de modulation, les étapes mentionnées a), b) et c) sont exécutées pour la vérification de l'authenticité du document de valeur, et, dans le cas où la courbe de réflectance et/ou la courbe de transmission ne dépassent pas l'amplitude minimum de modulation, le document de valeur est évalué en tant que faux.

**6.** Procédé selon une des revendications précédentes, **caractérisé en ce que** l'élément de sécurité est un élément de sécurité à fenêtre d'un document de valeur, par exemple un fil de sécurité à fenêtre (5) équipé en particulier d'un réseau de microlentilles.

**7.** Procédé selon une des revendications précédentes, **caractérisé en ce que** la courbe de combinaison (I(x), K(x)) est, pour distinguer une modulation d'intensité, vérifiée **en ce que** l'écart type de la courbe de combinaison le long de la direction longitudinale de l'élément de sécurité est déterminé et que cet écart type est comparé avec un seuil, cependant que l'élément de sécurité, en fonction de si l'écart type dépasse ou non le seuil, est évalué en tant qu'authentique ou en tant que faux.

**8.** Procédé selon une des revendications précédentes, **caractérisé en ce que** la courbe de réflectance est une courbe binaire de réflectance et que la courbe de transmission est une courbe binaire de transmission qui sont calculées respectivement par binarisation à partir de la courbe de réflectance et à partir de la courbe de transmission et ne comportent le long de la direction longitudinale (x) de l'élément de sécurité (5) respectivement que deux valeurs d'intensité différentes, et que, pour la détermination de la courbe de combinaison (I(x), K(x)), la courbe binaire de réflectance le long de la direction longitudinale de l'élément de sécurité (x) est compensée par pixels avec la courbe binaire de transmission.

**9.** Procédé selon une des revendications précédentes, **caractérisé en ce que** la courbe de combinaison (I(x), K(x)) calculée à partir de la courbe binaire de réflectance et à partir de la courbe binaire de transmission est, quant à une modulation d'intensité, vérifiée **en ce que**, par pixels, la somme des valeurs d'intensité de la courbe de combinaison le long de la direction longitudinale (x) de l'élément de sécurité est calculée et comparée avec un seuil, et l'élément de sécurité, en fonction de si la somme calculée dépasse ou ne dépasse pas un seuil, est évalué en tant qu'authentique ou en tant que faux.

**10.** Procédé selon une des revendications précédentes, **caractérisé en ce que** la courbe de réflectance (R(x)) et/ou la courbe de transmission (T(x)) sont, pour la détermination d'une première courbe de combinaison I(x) le long de la direction longitudinale de l'élément de sécurité, soustraites l'une de l'autre par pixels, et que la courbe de réflectance (R(x)) et/ou la courbe de transmission (T(x)) sont, pour la détermination d'une deuxième courbe de combinaison (K(x)) le long de la direction longitudinale de l'élément de sécurité, additionnées l'une à l'autre par pixels, et que tant la première courbe de combinaison (I(x)) que la deuxième courbe de combinaison (K(x)) sont vérifiées quant à leur modulation d'intensité, et que l'authenticité de l'élément de sécurité (5) est évaluée en fonction de la modulation d'intensité de la première courbe de combinaison (I(x)) et en fonction de la modulation d'intensité de la deuxième courbe de combinaison K(x).

**11.** Procédé selon la revendication 10, **caractérisé en ce que**, pour la première courbe de combinaison (I(x)), une premier écart type est déterminé, et pour la deuxième courbe de combinaison (K(x)), un deuxième écart type est déterminé, et que l'authenticité de l'élément de sécurité est évaluée en fonction du premier et du deuxième écart type.

**12.** Procédé selon une des revendications de 10 à 11, **caractérisé en ce que** la courbe de combinaison, en particulier la première et/ou la deuxième courbe de combinaison, est, quant à une modulation d'intensité, vérifiée **en ce qu'**une dépendance de la localisation de la courbe respective de combinaison le long de la direction longitudinale (x) de l'élément de sécurité est comparée avec une dépendance de la localisation attendue pour l'élément de sécurité, et, en fonction de la similitude de ces dépendances de localisation, l'élément de sécurité (5) est évalué en tant qu'authentique ou en tant que faux.

**13.** Procédé selon une des revendications de 10 à 12, **caractérisé en ce que** la courbe de réflectance et la courbe de transmission, utilisées pour la détermination de la première et de la deuxième courbe de combinaison et dont les valeurs d'intensité sont compensées entre elles par pixels sont une courbe binaire de réflectance et une courbe binaire de transmission, et que la première et deuxième courbe de combinaison calculées à partir de la courbe binaire de réflectance et à partir de la courbe binaire de transmission sont vérifiées quant à leur modulation d'intensité, qu'une première somme ($\sum I(x)$) est calculée par addition des valeurs d'intensité de la première courbe de combinaison (I(x)), et une deuxième

somme ($\sum K(x)$) est calculée par addition des valeurs d'intensité de la deuxième courbe de combinaison (K(x)), et l'authenticité de l'élément de sécurité est évaluée en fonction de la première ($\sum I(x)$) et de la deuxième somme ($\sum K(x)$).

14. Dispositif de vérification de l'authenticité d'un élément de sécurité (5), en particulier de l'élément de sécurité à fenêtre d'un document de valeur, avec au moins un capteur (21, 22, 23) pour la saisie du rayonnement électromagnétique réémis par l'élément de sécurité (5) et de celui transmis par l'élément de sécurité (5), et pour l'établissement d'une courbe de réflectance (R(x)) correspondant à l'intensité réémise et d'une courbe de transmission (T(x)) correspondant à l'intensité transmise le long de la direction longitudinale (x) de l'élément de sécurité (5), **caractérisé en ce que** le dispositif comporte un équipement d'évaluation (51) pour la vérification de l'authenticité de l'élément de sécurité, lequel est conçu pour exécuter les étapes du procédé suivant la revendication 1.

15. Dispositif de traitement de documents de valeur (1) destiné au traitement, en particulier à la vérification et/ou au comptage et/ou au triage de documents de valeur (3) et ayant un dispositif (21 - 23, 51) selon la revendication 14 conçu pour la vérification de l'authenticité de l'élément de sécurité (5) d'un document de valeur.

Fig. 1

Fig. 2

Fig. 3a

Fig. 3b

Fig. 3c

Fig. 4a

Fig. 4b

Fig. 4c

Fig. 4d

Fig. 5a

Fig. 5b

Fig. 5c

Fig. 5d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8965099 B2
- DE 10243051 A1
- DE 102011116487 A1
- WO 2014075796 A1